# EUROPEAN PATENT SPECIFICATION

(11) **EP 3 333 026 B1**
(45) Date of publication and mention of the grant of the patent: **26.02.2020**
(21) Application number: 18150547.0
(22) Date of filing: 14.11.2016
(51) Int. Cl.: B60S 1/54, B60S 1/56, H04N 5/217, G02B 27/00

(54) **SYSTEM FOR CLEANING A VEHICLE-MOUNTED SENSOR**
SYSTEM ZUR REINIGUNG EINES FAHRZEUGMONTIERTEN SENSORS
SYSTÈME DE NETTOYAGE D'UN CAPTEUR MONTÉ SUR UN VÉHICULE

(30) Priority: 13.11.2015 WO PCT/EP2015/076546
(43) Date of publication of application: 13.06.2018
(62) Divisional of application: 16198598.1
(73) Proprietor: FICO TRANSPAR, S.A., 08028 Barcelona (ES)
(72) Inventor: LÓPEZ GALERA, Robert, 08830 Sant Boi de Llobregat (Barcelona) (ES); ESTELLER PITARCH, Carlos, 08820 El Prat de Llobregat (Barcelona) (ES); MOTA LÓPEZ, Miguel, 08191 Rubí (Barcelona) (ES); ALCAIDE HERNÁNDEZ, Olallo, 08820 El Prat de Llobregat (Barcelona) (ES); RODRÍGUEZ ESTÉVEZ, Cristian, 08232 Viladecavalls (Barcelona) (ES); ESPINOSA, José Manuel, 08100 Mollet del Vallés (Barcelona) (ES)
(74) Representative: Herrero & Asociados, S.L.

(56) References cited:
- WO-A1-2015/120866
- US-A1- 2015 203 077

## Description

The present invention refers in general to techniques for automatically cleaning a surface of a sensor mounted on a vehicle by blowing air to remove light dirt (eg. dust) from the surface or remove liquid drops on the surface (eg. due to rain or washing) such that a clear signal can be captured anytime.

More in particular, it is an object of the present invention to provide a system for automatically cleaning a sensor surface which, in a simple manner and with a reduced cost, is capable of completing the cleaning process quickly and satisfactorily.

### BACKGROUND

At present, motor vehicles are commonly fitted with sensors to assist drivers in diverse traffic situations, such as, but not limited to, parking assistance, blind zone object detection, traffic lane departure, traffic signal identification or rear-view mirror substitution.

Generally, these sensors are fitted on a vehicle's exterior surface such that a sensor surface is exposed to dirt, which reduces the quality of the captured signal. Hence, there is a need to remove a foreign matter stuck onto a surface of a vehicle-mounted sensor; need that is further increased when the sensor is an optic sensor having a lens surface exposed to dirt, directly or indirectly, such as a vehicle-mounted parking camera.

There are various types of washing devices to wash an exposed surface of an in-vehicle mounted camera (eg. a lens or a cover window) and which are conventionally equipped with a high-pressure air generation device, which generates high-pressure wash water by using high-pressure air and sprays the high-pressure wash water on the exposed surface of the camera to wash and clean it.

The problem with these devices is that, until the wash water has fully evaporated, the driver of the vehicle perceives a blurry image due to the remaining wash water on the exposed surface of the camera. This is particularly inconvenient when the driver desires to park and notices that the camera is dirty. The driver then uses the device to wash the dirt off, but has to wait until it has fully evaporated to perceive a clear image. Therefore, the parking assistance system cannot be immediately used after washing it with this kind of devices.

In case of light dirt (eg. dust) or less stringent cleaning requirements, a blast of air is sufficient to clean the exposed surface. Generally, sensors that do not require capturing an image, such as electromagnetic or ultrasonic parking sensors, are those with less stringent cleaning requirements.

To solve these problems, there are known devices which use a blast of air to dry the remaining washing water on the exposed surface. These devices may also be operated to only blast air in case of light dirt or to dry the exposed surface without washing it.

However, these devices are usually based in motor driven air pumps, which are complex, noisy, expensive, bulky and heavy equipments. These features make these devices inappropriate for automotive use and there is a need to provide an alternative solution to these problems.

Document WO 2015/120866 A1 is considered to be the prior art closest to the subject-matter of independent claim 1.

### SUMMARY

Therefore, it is an object of the invention to provide a system for cleaning a vehicle-mounted sensor surface exposed to dirt that is capable of completing a cleaning process quickly and with a reduced number of components.

The invention is defined by the subject-matter of independent claim 1.

The technical effect and advantage of the above-described configuration is that generation of pressurized air is performed with a simple, low-noise, cheap, small and lightweight equipment.

Another advantage of this configuration is that the liquid pump may be used to supply pressurized liquid to other vehicle components. For example, part of the pressurized washing liquid flow supplied by a liquid pump used in another washing system (eg. headlight, front windshield or rear windshield washing systems) to a liquid nozzle arranged to discharge washing liquid onto another vehicle surface (eg. headlight, front windshield or rear windshield) may be branched out and supplied at the air pump fluid inlet.

Therefore, one liquid pump is capable of generating pressurized liquid for several vehicle applications such that several functions may be implemented with a reduced number of components. Therefore, the system is implemented in a very cost-effective manner.

The flow of pressurized liquid may be supplied at a manometric pressure in the range of 0.5 bar to 9 bar at a liquid pump outlet.

In specific embodiments of the invention, the sensor surface may be transparent to electromagnetic radiation. More specifically, the sensor surface may be transparent to infrared radiation, visible radiation, ultraviolet radiation or any combination thereof. In other words, the sensor surface may allow electromagnetic radiation to pass therethrough.

The air pump may be provided with a variable volume fluid chamber. This chamber is communicated with the fluid inlet and the air-fluid interface is arranged to separate the fluid and compression chambers from each other. The fluid chamber is configured such that the flow of pressurized liquid varies its volume. Volume variation of the liquid chamber causes volume variation of the compression chamber to generate a volume of pressurized air with an absolute pressure value below 10 bar.

The flow of pressurized liquid may increase the volume of the fluid chamber. The volume increase of the fluid chamber may cause volume reduction of the compression chamber. The volume of the compression chamber may be reduced to generate a volume of pressurized air with an absolute pressure value below 10 bar.

The air pump may be provided with a body. The air-fluid interface may be connected to the body such that the compression chamber is defined by the body and the air-fluid interface. The body may be formed as a one-piece element or may be formed as an assembly of separate parts.

The air-fluid interface may be a plunger arranged in sliding contact with the body. In this case, the compression chamber is defined by the body and the plunger. The plunger is configured to slide within the body with the flow of pressurized liquid. In that situation, the plunger slides within the body and varies the volume of the compression chamber; preferably, the plunger reduces the volume of the compression chamber when displaced by the pressurized liquid. The plunger may be biased towards the fluid inlet by a spring housed in the body.

The air-fluid interface may be an elastic element attached to the body. In this case, the compression chamber is defined by the body and the elastic element. The elastic element is configured to deform with the flow of pressurized liquid. In that situation, the elastic element deforms and varies the volume of the compression chamber; preferably, the elastic element reduces the volume of the compression chamber when deformed by the flow of pressurized liquid. The elastic element may be an elastic membrane. The elastic element may comprise a bellow-shaped portion that serves to bias the elastic element towards the fluid inlet. The elastic element may be made of an elastomeric material.

The air-fluid interface may be arranged to split the body into a first and a second portion. For example, the plunger or the elastic element may be arranged to split the body into first and second portions. In this configuration, the compression chamber is defined by the first portion of the body and the air-fluid interface, whereas the fluid chamber is defined by the second portion of the body and the air-fluid interface.

The air pump may be provided with a one-way valve communicated with the compression chamber. This one-way valve allows air to enter into the compression chamber during expansion of the same and prevents air from entering into the chamber during compression of the same.

Compressing a volume of air and discharging it onto the sensor surface is carried out by a control unit operatively associated with the air flow control device and with the liquid pump. The control unit first closes the air flow control device and activates the liquid pump to supply pressurized liquid during a predetermined period of time to generate a volume of pressurized air within the compression chamber. Next, the air flow control device is opened such that at least one blast of pressurized air is applied onto the sensor surface to blow off dust or any drop of liquid from the sensor surface. The control unit then deactivates the liquid pump such that the compression chamber is refilled with non-compressed air. Finally, the control unit closes the airflow control device. In case a one-way valve is provided, the liquid pump and the air flow control device are closed at the same time by the control unit as the compression chamber is refilled with non-compressed air through the one-way valve.

The cleaning system may also comprise a washing liquid nozzle arranged to discharge washing liquid onto the sensor surface. A liquid flow control device may also be provided in communication with the washing liquid nozzle for controlling the flow of liquid therethrough. A liquid pump may supply pressurized washing liquid to the liquid flow control device.

Preferably, washing liquid is pressurized by the same liquid pump that supplies pressurized liquid to the air pump. Thus, the liquid pump may supply pressurized washing liquid to both the air pump liquid inlet and the liquid flow control device.

Dispensing the washing liquid and the air blow in a coordinated manner is carried out by the control unit operatively associated with the air flow control device, the liquid flow control device and the liquid pump. The control unit is adapted to perform different cleaning cycles. In a preferred cleaning cycle, the control unit first closes the air flow control device, opens the liquid flow control device and activates the liquid pump to supply pressurized washing liquid during a predetermined period of time. Next, the control unit closes the liquid flow control device to generate a volume of pressurized air within the compression chamber. The control unit then opens the air flow control device such that at least one blast of pressurized air is applied onto the sensor surface to blow off any drop of washing liquid from the sensor surface. Subsequently, the control unit deactivates the liquid pump such that the compression chamber is refilled with non-compressed air. Finally, the control unit closes the air flow control device. In case a one-way valve is provided, the liquid pump and the air flow control device are closed at the same time by the control unit as the compression chamber is refilled with non-compressed air through the one-way valve.

This cleaning system efficiently removes foreign matter strongly adhered onto the sensor surface with reduced washing fluid consumption and ensures that any drop of washing liquid on the sensor surface which may impair capturing a quality signal, is quickly removed and the cleaning time is therefore reduced.

The system may be provided with a housing having an opening adapted to fit the sensor surface. The air nozzle and/or the liquid nozzle may be fixedly or movably attached to the housing. In other words, the air and/or liquid nozzles may be fixed or movable nozzles. At least one of the air pump, the air flow control device and the liquid flow control device may be attached to the housing.

Movable nozzles are configured to move from a non-operative position to an operative position. In the non-operative position the movable nozzles are at least partially hidden in the housing, whereas in the operative position the movable nozzles are arranged to discharge fluid onto the sensor surface.

### BRIEF DESCRIPTION OF THE DRAWINGS

Non-limiting examples of the present disclosure will be described in the following, with reference to the appended drawings, in which:
Figures 1 and 2 show, respectively, front elevational and perspective views of a cleaning system according to an example of the invention.
Figures 3 and 4 show a sectional view of a first embodiment of the air pump in a non-operative state and in an operative state, respectively.
Figures 5 and 6 show a sectional view of a second embodiment of the air pump in a non-operative state and in an operative state, respectively.
Figures 7 and 8 show a sectional view of a third embodiment of the air-pump in a non-operative state and in an operative state, respectively.
Figure 9 is a graph representative of washing liquid and air activation sequence according to an exemplary embodiment of the invention.
Figure 10 is a graph representing the measured flow of washing liquid and air dispensed during the cleaning sequence of figure 7.
Figure 11 shows a sectional view of another embodiment of the cleaning system of the invention.
Figure 12 shows a sectional view of another embodiment of the cleaning system of the invention.
Figure 13 shows a schematic representation of two additional embodiments of the cleaning system of the invention, incorporating a flow distributor and two individual air nozzles.
Figure 14 shows a schematic representation of another embodiment of the cleaning system without airflow control means.
Figure 15 shows a schematic representation of another embodiment of the cleaning system of the invention incorporating a telescopic air nozzle. Drawing (A) shows the cleaning system in an initial phase; drawing (B) shows the system during a compression extension phase; and drawing (c) shows the system during an air ejection phase.
Figure 16 shows a schematic representation of another embodiment of the cleaning system of the invention incorporating a reversible fluid pump; wherein drawing (A) shows the system operating in normal mode; and drawing (B) shows the system operating in reverse mode.
Figure 17 shows a schematic representation of another embodiment of the cleaning system of the invention.
Figure 18 shows a schematic representation of another embodiment of the cleaning system of the invention.

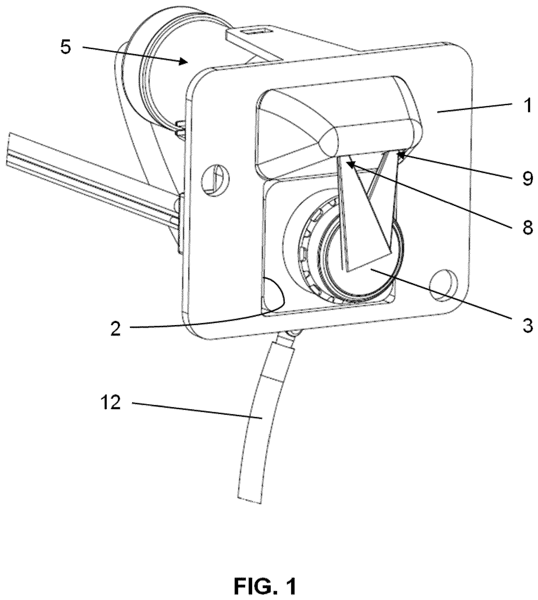

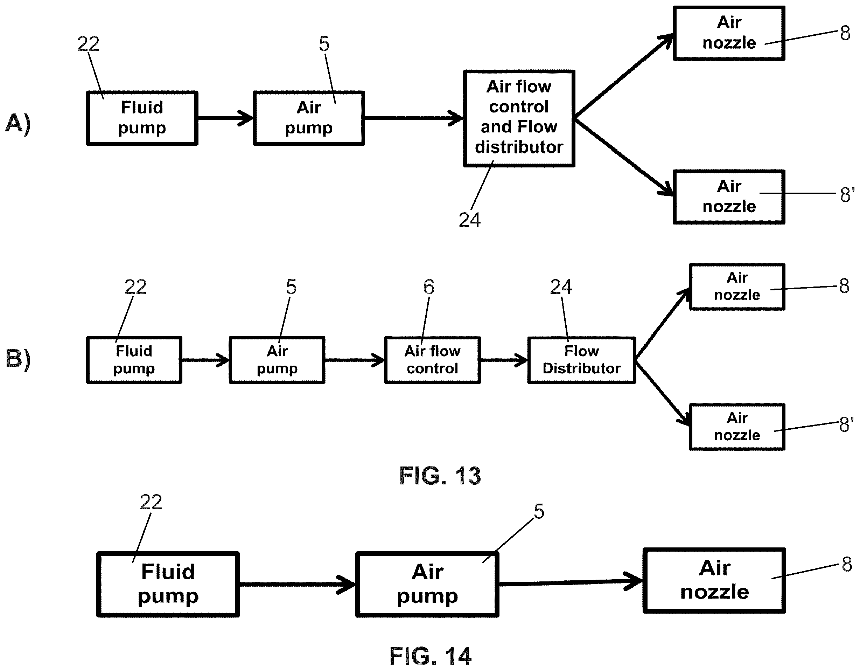

The embodiments illustrated as a schematic representations in figures 13 to 18, can be implemented as shown in any of the embodiments of figures 1 to 10.

### DETAILED DESCRIPTION OF EXAMPLES

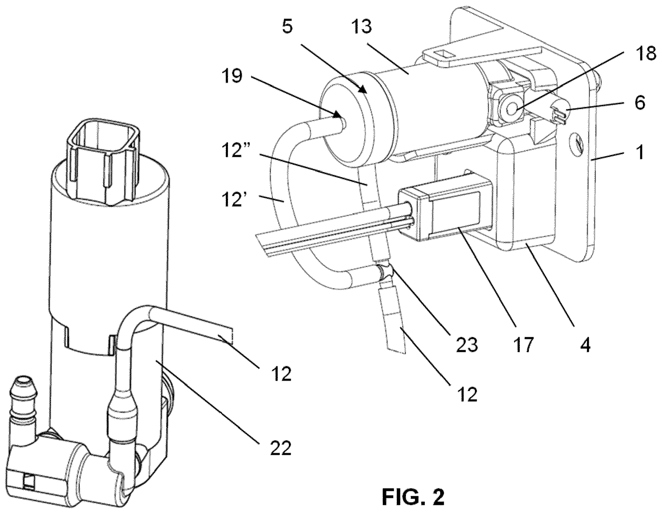

Figures 1 and 2 show a support 1, preferably made of a plastic material, suitable to be fitted in an automobile surface. The support 1 has an opening 2 and a sensor surface 3, a camera lens in this example, mounted at that opening 2, and a video camera (not shown) inside a housing 4 of the support 1 and operatively arranged with respect to the camera lens 3. Additionally, an air pump 5, an air control device 6 and a liquid control device 7, are also mounted in the support 1. Preferably, the air control device 6 and the liquid control device 7 are implemented in this example by means of first and second electrovalves, respectively.

A liquid nozzle 9 and an air nozzle 8 are mounted at an outer surface of the support 1 as shown in the figure, and they are arranged to respectively dispense washing liquid and a blast of air on the camera lens 3.

The first electrovalve 6 is communicated with the air nozzle 8 and with the air pump 5 for opening and closing the flow of air provided by the air pump 5 through the air nozzle 8. Similarly, the second electrovalve 7 is communicated with the liquid nozzle 9 and with a washing liquid conduit 12 for opening and closing the flow of washing liquid through the liquid nozzle 9.

An electric connector 17 is also coupled with the support 1 for the electrical connection of the video camera or any other sensor with an external equipment (not shown).

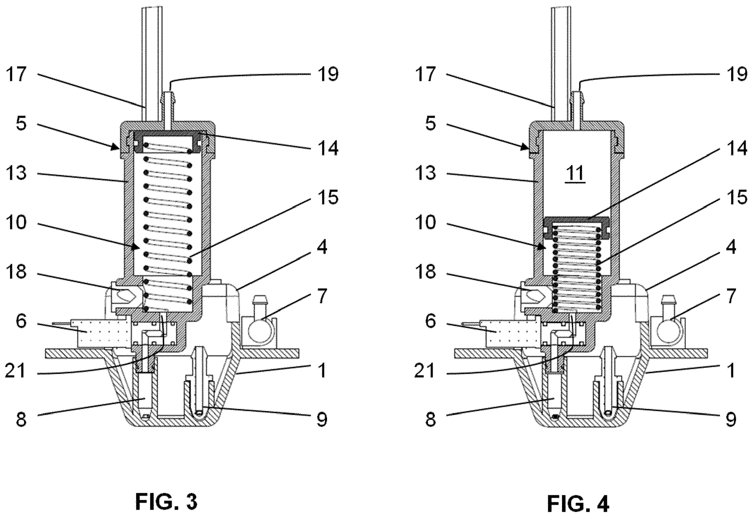

Figures 3 and 4 show a first embodiment of the air pump 5 having a body 13 and an air-fluid interface housed inside the body. In this example, the body 13 is a cylinder having a fluid inlet 19 and an air outlet 21 and the air-fluid interface is a displaceable plunger 14. The plunger 14 splits the cylinder 13 into first and second portions such that a compression chamber 10 is defined by the first portion of the cylinder 13 and the plunger 14 and a fluid chamber 11 is defined by the second portion of the cylinder 13 and the plunger 14. A spring coil 15 is housed within the first portion of the cylinder 13 such that the plunger 14 is biased by the spring coil 15 towards the fluid inlet 19.

Alternatively, the spring coil 15 may be housed within the second portion of the cylinder 13 and arranged so as to bias the plunger 14 towards the fluid inlet opening 19.

The spring coil 15 is arranged to enlarge the volume of the compression chamber 10 after the air pump 5 has dispensed a blast of air. A one-way valve 18, mounted in the cylinder 13 and communicated with the compression chamber 10, is configured to allow air to enter into the compression chamber 10 during expansion of the compression chamber 10, and to prevent air from entering into the chamber 10 during compression of the compression chamber 10. Preferably, this one-way valve 18 is made of an elastic material and has a conical shape, where its narrower end has an opening and is placed inside the cylinder 13.

The washing liquid conduit 12 is additionally communicated with the fluid inlet 19, such that the air pump 5 can be operated by a flow of pressurized washing liquid supplied thereto. More in particular, the washing liquid conduit 12 is connected with a T-junction connector 23 such that a first branch 12' of the conduit 12 is connected with the connector 23 and with the fluid inlet 19 of the air pump 5 and a second branch 12" is connected with the connector 23 and with the second electrovalve 7. In this way, a flow of pressurized washing liquid generated by a liquid pump 22 is supplied both to the air pump 5 and to the second electrovalve 7.

As a vehicle user activates the cleaning system, a control unit implemented by means of a programmable electronic device, electrically communicated with the first and second electrovalves 6, 7 and the liquid pump 22, is adapted or programmed to carry out a cleaning cycle, in which first the liquid pump 22 is activated to pump washing liquid from a washing liquid reservoir to the washing liquid conduit 12 generating a flow of washing liquid. The second electrovalve 7 in this first stage of the cleaning cycle is open, so that a burst of washing liquid is dispensed through the liquid nozzle 9 on a camera lens surface 3. At this stage the first electrovalve 6 remains closed, although the flow of washing liquid is also fed to the fluid inlet 19 of the air pump 5.

At a second stage of the cleaning cycle, that is, after a predetermined period of time has elapsed, the control unit closes the second electrovalve 7 such that the circulation of pressurized washing liquid through the second branch 12" and the dispensing of the same is interrupted. However, at this situation the air pump 5 is filled with washing liquid, whose pressure is applied to the plunger 14 while the first electrovalve 6 remains closed. The plunger 14 is displaced against the elastic action of the spring 15, increasing the volume of the variable volume fluid chamber 11 and reducing the volume of the variable volume compression chamber 10, thus, compressing a volume of air enclosed within the compression chamber 10. That is, the plunger 14 passes from its non-operative state, depicted in figure 3, to its operative state, depicted in figure 4. The air pump 5 is configured such that the fluid chamber 11 expands to compress the compression chamber 10 to pressurize a volume of air enclosed in that chamber 10 with an absolute pressure below 10 bar. The one-way valve 18 remains closed at this stage due to the pressure within the compression chamber 10 applied to the conical surface of that valve 18.

It can be appreciated that the cleaning system, and in particular the air pump 5 and the liquid pump 22 are adapted in such a manner that pressure of the washing liquid pumped by the liquid pump 22 overcomes the elastic force of the coil spring 15 to operate the air pump 5.

Once a certain level of air pressure is reached, the control unit opens the first electrovalve 6 so that the pressurized air is released through the air nozzle 8 and a blast of air is projected on the camera lens surface 3 with enough pressure to remove and dry any liquid remaining on that surface.

After a determined period of time, the control unit stops the liquid pump 22 so that the manometric pressure on the plunger 14 is released. Then, the elastic force of the coil spring 15 forces the plunger 14 to return to its original position (figure 3). At the same time that the compression chamber 10 expands, air from the exterior of the air pump 5 is suctioned through the one-way valve 18 filling the compression chamber 10 with non-compressed air.

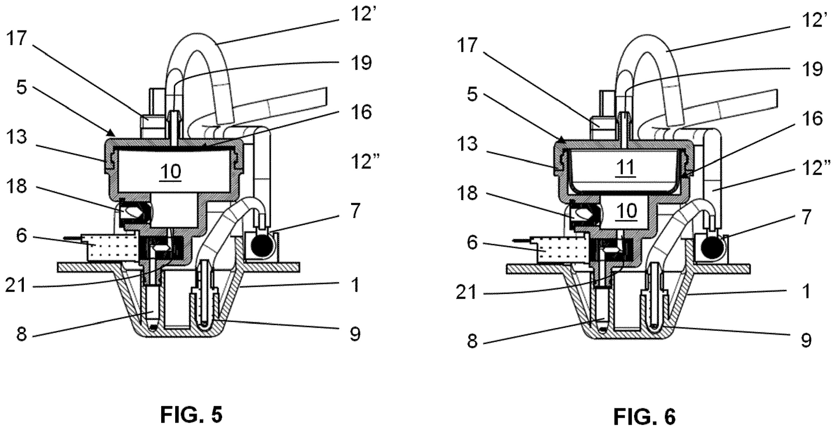

Figures 5 and 6 show a second embodiment of the air pump 5 where the air-fluid interface is an elastic element 16 instead of a plunger 14. Specifically, the elastic element 16 in this embodiment is an elastic membrane. The elastic membrane 16 is attached to the cylinder 13 and splits it into first and second portions such that the compression chamber 10 is defined by the first portion of the cylinder 13 and the elastic membrane 16 and the fluid chamber 11 is defined by the second portion of the cylinder 13 and the elastic membrane 16.

In figure 5, the air pump 5 is in a non-operative state, where the first and second electrovalves 6, 7 are closed and the liquid pump 22 is not supplying liquid to the cleaning system.

With both electrovalves 6, 7 closed and the liquid pump 22 activated to pump washing liquid from a washing liquid reservoir to the washing liquid conduit 12 generating a flow of washing liquid, the air pump 5 is filled with washing liquid, whose pressure is applied to the elastic membrane 16 while the first electrovalve 6 remains closed. The elastic membrane 16 deforms (figure 6), increasing the volume of the variable volume fluid chamber 11 and reducing the volume of the variable volume compression chamber 10, thus, compressing a volume of air enclosed within the compression chamber 10. The air pump 5 is configured such that the fluid chamber 11 expands to compress the compression chamber 10 to pressurize a volume of air enclosed in that chamber 10 with an absolute pressure below 10 bar.

It can be appreciated that the cleaning system, and in particular the air pump 5 and the liquid pump 22 are adapted in such a manner that pressure of the washing liquid pumped by the liquid pump 22 overcomes the elastic force of the elastic membrane 16 to operate the air pump 5.

Once the volume of pressurized air is discharged onto the surface 3 through the air nozzle 8, the control unit stops the liquid pump 22 so that the manometric pressure on the elastic membrane 16 is released. Then, the elastic force of the elastic membrane 16 causes the elastic membrane 16 to return to its original position.

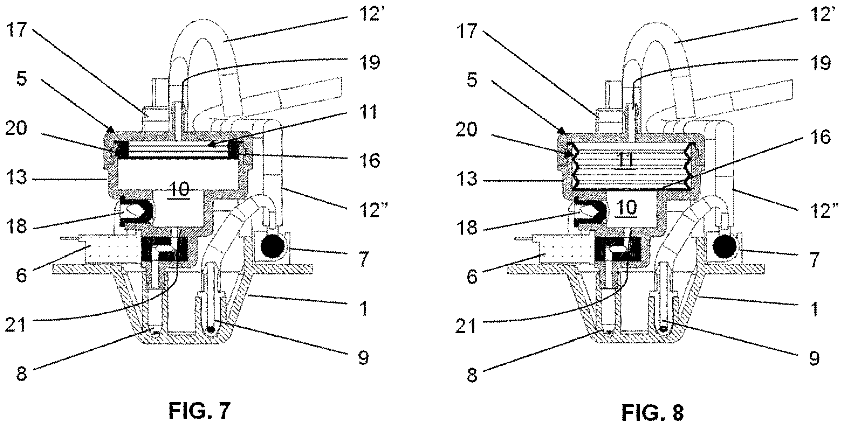

Figures 7 and 8 show a third embodiment of the air pump 5 where the air-fluid interface is an elastic element 16 having a bellow-shaped portion 20. The elastic element 16 is attached to the cylinder 13 and splits it into first and second portions such that the compression chamber 10 is defined by the first portion of the cylinder 13 and the elastic element 16 and the fluid chamber 11 is defined by the second portion of the cylinder 13 and the elastic element 16.

In figure 7, the air pump 5 is in a non-operative state, where the first and second electrovalves 6, 7 are closed and the liquid pump 22 is not supplying liquid to the cleaning system. In this state, the bellow-shaped portion 20 of the elastic element 16 is in a relaxed state.

With both electrovalves 6, 7 closed and the liquid pump 22 activated to pump washing liquid from a washing liquid reservoir to the washing liquid conduit 12 generating a flow of washing liquid, the air pump 5 is filled with washing liquid, whose pressure is applied to the elastic element 16 while the first electrovalve 6 remains closed. The bellow-shaped portion 20 of the elastic element 16 stretches out (figure 8), increasing the volume of the variable volume fluid chamber 11 and reducing the volume of the variable volume compression chamber 10, thus, compressing a volume of air enclosed within the compression chamber 10. The air pump 5 is configured such that the fluid chamber 11 expands to compress the compression chamber 10 to pressurize a volume of air enclosed in that chamber 10 with an absolute pressure below 10 bar.

It can be appreciated that the cleaning system, and in particular the air pump 5 and the liquid pump 22 are adapted in such a manner that pressure of the washing liquid pumped by the liquid pump 22 overcomes the elastic force of the elastic element 16 to operate the air pump 5.

Once the volume of pressurized air is discharged onto the surface 3 through the air nozzle 8, the control unit stops the liquid pump 22 so that the manometric pressure on the elastic element 16 is released. Then, the elastic force of the bellow-shaped portion 20 of the elastic element 16 causes the elastic element 16 to return to its original position.

A spring coil (not shown) may be arranged to assist the bellow-shaped portion 20 to cause the elastic element 16 to return to its original position. A first option consists of arranging said spring coil surrounding the bellow-shaped portion 20 such that the spring coil wounds around its creases. A second option consists of overmolding a spring coil with an adequate material, such as an elastomeric material, to form an elastic element 16 with a bellow-shaped portion 20 containing the spring coil. Other options of arranging the spring coil are not ruled out.

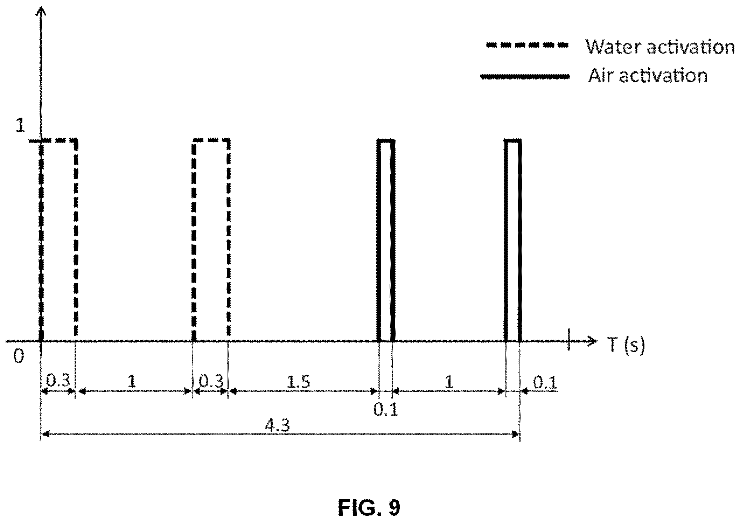

Several cleaning sequences can be performed depending on the conditions of the optic lens to be cleaned. Figure 9 is an example of a preferred cleaning sequence which can be implemented in the case of heavy dirt, such as dried mud or insects stuck on the lens surface 3. In the case of figure 9, the cleaning cycle includes at least two consecutive washing liquid discharges, each liquid discharge having a duration within the range 0.1 to 0.5s (in this case 0.3 s), and with a time interval of 1s between these two liquid discharges. After, 1.5s, at least two consecutive blasts of air of 0.1s are dispensed with a time interval of 1s. The duration of the complete cleaning sequence is 4.3s.

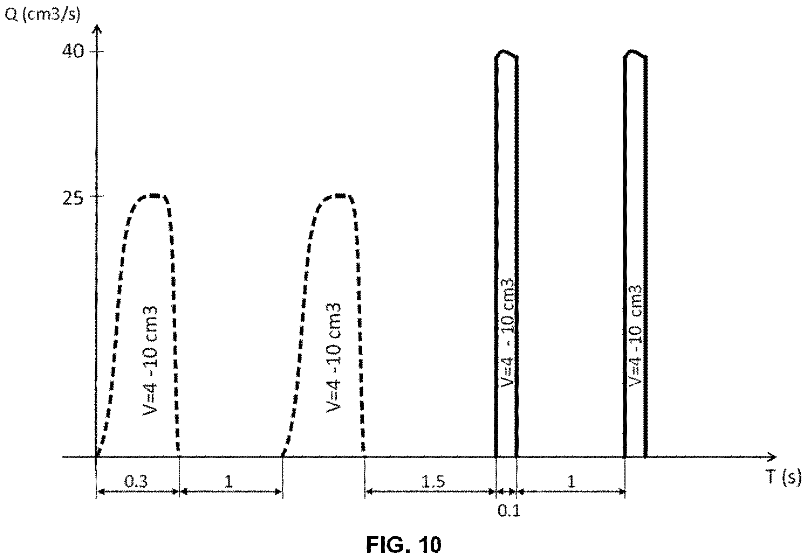

The measured volume of liquid and air per unit of time measured in the cleaning cycle of figure 9 is shown in figure 10.

In other conditions like light dirt, less volume of liquid and air is needed, so that less number of discharges are dispensed and the duration of the same is shorter.

In another preferred embodiment of the invention, the control unit can be programmed to operate the air nozzle 8 and liquid nozzle 9 to carry out different cleaning sequences. For example, the control unit can be programmed to operate the air nozzle 8 and liquid nozzle 9 independently from each other, to dispense only one or more bursts of washing liquid or to dispense only one or more blasts of air, which can be done simply by opening and closing the corresponding electrovalve 6, 7.

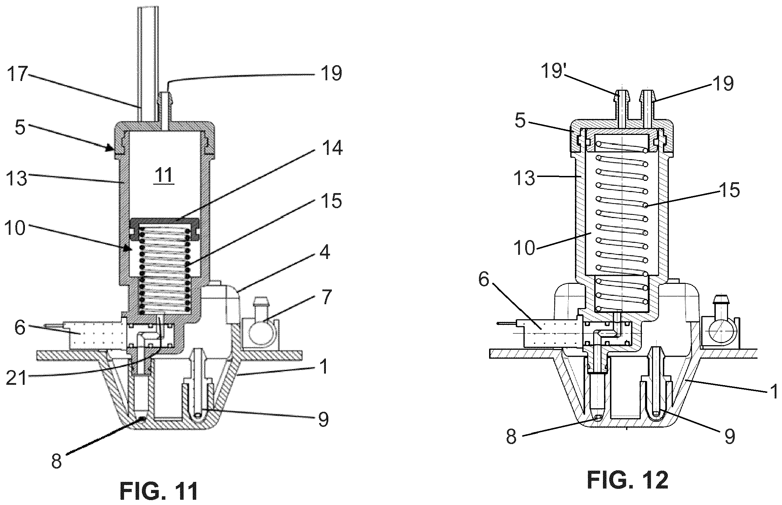

Additionally, in any of the embodiments of the figures 3 to 8, the one-way valve 18 can be eliminated. For example, in the embodiment of Figure 11, which is the same embodiment of figures 3 and 4, the one-way valve 18 has been eliminated. The air admission during the air refill, is carried out through the air nozzle 8, and keeping the electrovalve 6 opened.

Additionally, in any of the embodiments of figures 3 to 8 and 11, there are provided two fluid inlets 19,19' connected to a respective liquid pump (not shown in the figure). For example, in the embodiment of figure 12, which is the same embodiment of figure 11, there are two fluid inlets 19,19'. The technical effect of having two fluid inlets connected to a respective liquid pumps, is that the cylinder compression time is reduced.

As shown in figure 13, in some preferred embodiments of the invention, the cleaning system has one or more individual air nozzles 8,8',for example in the embodiment of figure 13 it has two air nozzles 8,8'. The cleaning system further comprises a flow distributor 24 connected between the air pump 5 and the two air nozzles 8,8'. The flow distributor 24 may consist in the electrovalve (solenoid valve) 6 provided with one or more outlets, such as each outlet is connected with one of the air nozzles 8,8' for cleaning one or more sensor surface. During compression phase all the outlets are closed, and during air ejection phase one or two outlets are open.

The solenoid valve 6 can be integrally formed with the flow distributor 24 (drawing 13A), or alternatively it can be implemented as an external valve (drawing 13B). To dry or clean more than one sensor surface or parts of the sensor surface, the flow distributor 24 would direct pressurized air towards the two output nozzles 8,8'.

Figure 14 shows an embodiment without air flow control means, that is, without solenoid valve 6, so that the air pump 5 is directly connected with the air nozzle 8. When the liquid pump 22 is activated, air is pushed by a cylinder piston or membrane, and the air comes out of the air nozzle 8 with enough pressure to dry a sensor surface.

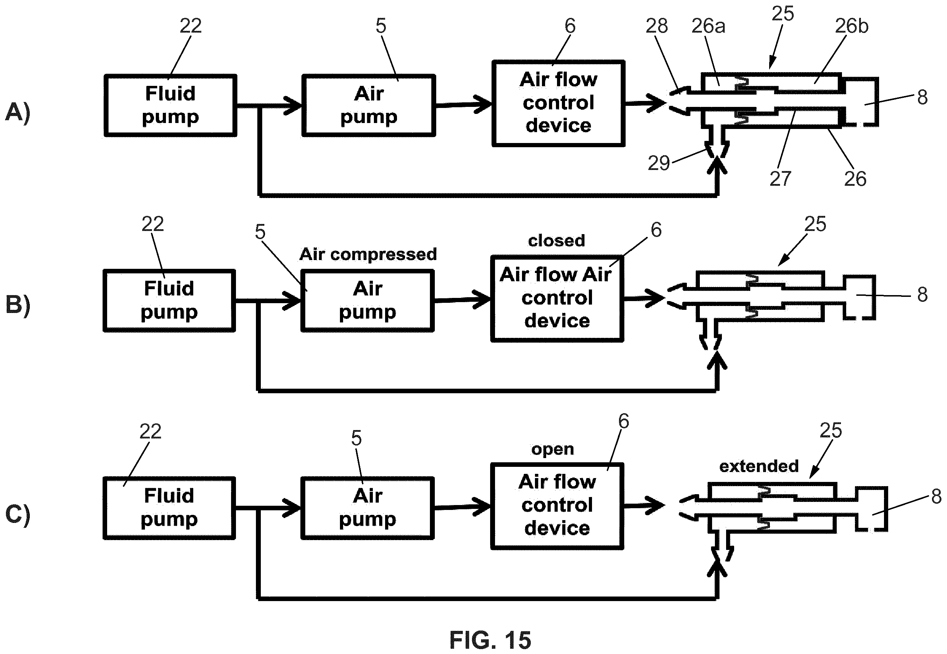

Additionally, in any of the embodiments of the previous figures, the air nozzle can be constructed as a telescopic nozzle. For example, in the embodiment of figure 15 the cleaning system includes a telescopic air nozzle 25 incorporating an extendable air nozzle 8. The telescopic air nozzle 25 comprises a cylinder 26 and a plunger 27 housed within the cylinder 26, such as the plunger 27 divides the cylinder 26 internally in two chambers 26a,26b, such as one of the chambers 26a is connected with a first inlet (29) in turn connected directly with the fluid pump output (22). The plunger 27 is hollow and it is connected with a second inlet (28) in turn connected with the airflow control device 6 output.

For ejecting pressurized air through the air nozzle 8, the fluid (liquid) pump 22 provides pressurized liquid both to the air pump 5 and to the telescopic air nozzle 25 through the inlet 29. Then, the plunger 27 and the air nozzle 8 extends outwardly (drawings 15), and while it is extended, the air pump supplies pressurized air through the inlet 28 and through the interior of the plunger 27.

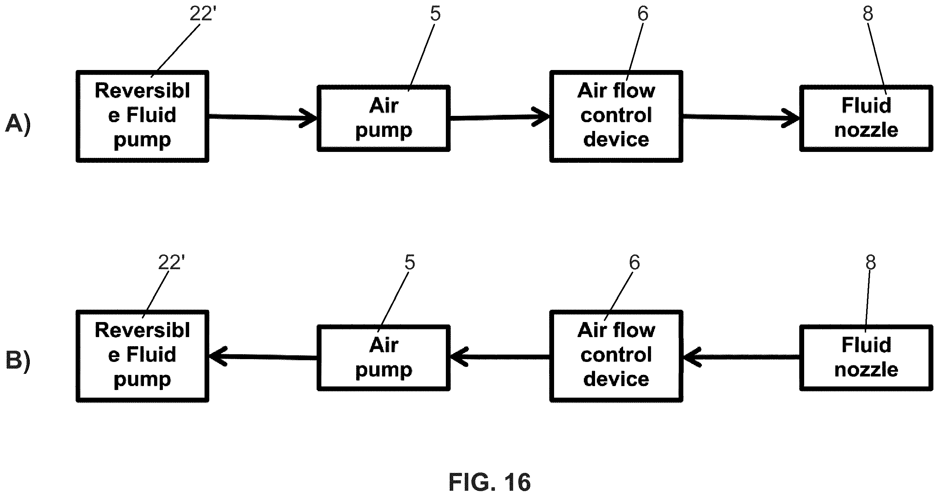

In the embodiment of figure 16 the cleaning system incorporates a reversible fluid pump 22', which operates in the same manner during as previously described during the compression and air ejection phases (drawing A). However, during the air refilling phase (drawing 16B), the reversible fluid pump 22'reverses its function to work as a vacuum pump.

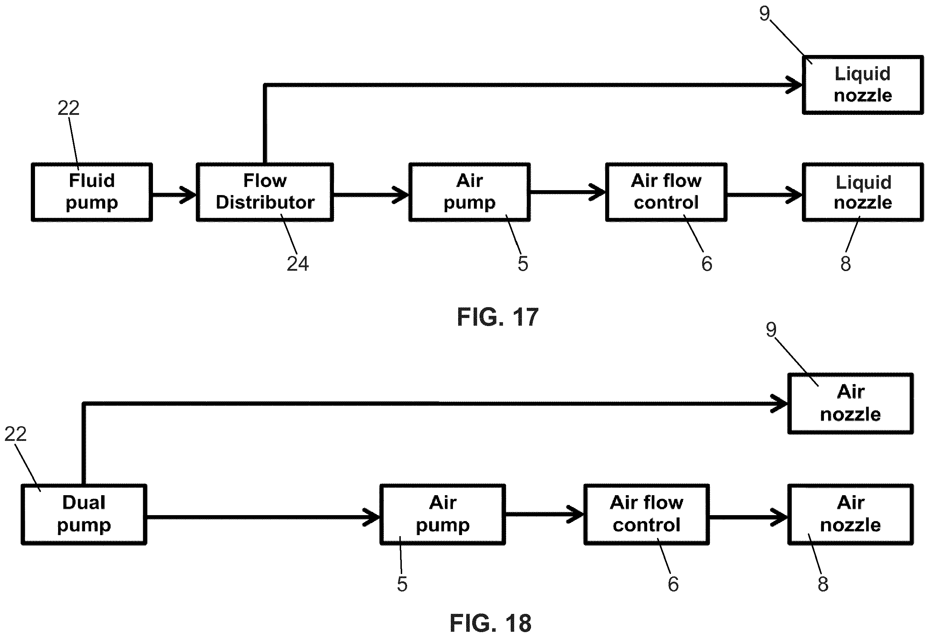

In the embodiment of figure 17, the system incorporates a flow distributor 24 connected between the fluid pump 22 and the air pump 5, such as an output of the flow distributor 24 is connected with the liquid nozzle 9, so that the flow distributor 24 separates the liquid circuit and the air circuit.

Alternatively and as shown in figure 18, instead of a flow distributor 24, the fluid pump 22 can consist of a dual fluid pump, that is, a fluid pump having two individual fluid outputs, such as each output supplies pressurized fluid to different fluid circuits. In the embodiment of figure 18, the dual fluid pump 22 has two fluid outputs, one of them is connected with the liquid nozzle 9, and the other one is connected with the air pump 5.

Reference signs related to drawings and placed in parentheses in a claim, are solely for attempting to increase the intelligibility of the claim, and shall not be construed as limiting the scope of the claim.

## Claims

1. System for cleaning an external vehicle-mounted sensor surface, comprising:
- two air nozzles (8,8',9) arranged to discharge air onto one or more sensor surfaces (3);
- an air pump (5) comprising a fluid inlet (19), an air outlet (21), an air-fluid interface (14; 16) and a variable volume compression chamber (10) communicated with the air outlet (21); **characterized in that** the system also comprises:
- an airflow control device (6) communicated with the air nozzles (8,8') and the air outlet (21) for controlling the flow of air therethrough;
- a liquid pump (22) communicated with the fluid inlet (19) to supply a flow of pressurized liquid such that the volume of the compression chamber (10) varies to generate a volume of pressurized air with an absolute pressure value below 10 bar; and a flow distributor (24) connected between the air pump (5) and the two air nozzles (8,8') or between the fluid pump (22) and the air pump (5) so that one output of the flow distributor (24) is connected with a liquid nozzle (9), so that the flow distributor (24) separates the liquid circuit and the air circuit.

2. System according to claim 1 comprising one air nozzle constructed as a telescopic nozzle (25), comprising an extendable air nozzle (8), cylinder (26) and a hollow plunger (27) housed within the cylinder (26), so that the plunger (27) divides the cylinder (26) internally in two chambers (26a,26b), so that one of the chambers (26a) is connected with a first inlet (29) in turn connected directly with the fluid pump output (22), and wherein the plunger (27) is connected with a second inlet (28) in turn connected with the airflow control device (6) output.

3. System according to claim 1 or 2, where the volume of the compression chamber (10) is reduced to generate a volume of pressurized air.

4. System according to any of the preceding claims, where the air pump (5) further comprises a variable volume fluid chamber (11) communicated with the fluid inlet (19), the air-fluid interface (14; 16) arranged to separate the fluid and compression chambers (10, 11) from each other, and where the flow of pressurized liquid varies the volume of the fluid chamber (11) so as to vary the volume of the compression chamber (10) to generate a volume of pressurized air with an absolute pressure value below 10 bar.

5. System according to any of the preceding claims, where the air pump (5) further comprises a body (13) to which the air-fluid interface (14; 16) is connected such that the compression chamber (10) is defined by the body (13) and the air-fluid interface (14; 16)and where the air-fluid interface (14; 16) splits the body (13) into first and second portions such that the compression chamber (10) is defined by the first portion of the body (13) and the air-fluid interface (14; 16) and such that the fluid chamber (11) is defined by the second portion of the body (13) and the air-fluid interface (14; 16).

6. System according to claim 5, where the air-fluid interface is a plunger (14) arranged in sliding contact with the body (13) and configured such that the flow of pressurized liquid displaces the plunger (14) so as to vary the volume of the compression chamber (10) to generate a volume of pressurized air with an absolute pressure value below 10 bar.

7. System according to claim 6, where the plunger (14) is biased towards the fluid inlet (19) by a spring (15) housed in the body (13).

8. System according to claim 5, where the air-fluid interface is an elastic element (16) attached to the body (13) and configured such that the flow of pressurized liquid deforms the elastic element (16) so as to vary the volume of the compression chamber (10) to generate a volume of pressurized air with an absolute pressure value below 10 bar.

9. System according to claim 8, where the elastic element (16) is an elastic membrane.

10. System according to claim 8, where the elastic element (16) has a bellow-shaped portion (20).

11. System according to any of claims 8-10, where the elastic element (16) is made of an elastomeric material.

12. System according to any of the preceding claims, wherein the air pump (5) is provided with a one-way valve (18) communicated with the compression chamber (10), the one-way valve (18) being configured to allow air to enter into the compression chamber (10) during expansion of the same and to prevent air from entering into the compression chamber (10) during compression of the same.

13. System according to any of the preceding claims, further comprising a washing liquid nozzle (9) arranged to discharge washing liquid onto the sensor surface (3) and a liquid flow control device (7) communicated with the washing liquid nozzle (9) for controlling the flow of liquid therethrough.

14. System according to any of the preceding claims, further comprising a control unit operatively associated with at least the air flow control device (6) and the liquid pump (22) for commanding their operation, and where the control unit is adapted to carry out at least one cleaning cycle.

15. System according to any of the preceding claims, further comprising a housing (1) having an opening (2) adapted to fit the sensor surface (3), where at least one of:
(i) the air nozzle (8) is fixedly attached to the housing (1);
(ii) the liquid nozzle (9) is fixedly attached to the housing (1);
(iii) the air nozzle (8) is movably attached to the housing (1), the air nozzle (8) being configured to move from a non-operative position to an operative position such that in the non-operative position the air nozzle (8) is at least partially hidden in the housing (1);
(iv) the liquid nozzle (9) is movably attached to the housing (1), the liquid nozzle (9) being configured to move from a non-operative position to an operative position such that in the non-operative position the liquid nozzle (9) is at least partially hidden in the housing (1);
(v) the air pump (5) is attached to the housing (1);
(vi) the air flow control device (6) is attached to the housing (1); and
(vii) the liquid flow control device (7) is attached to the housing (1).

## Patentansprüche

1. System zum Reinigen einer außen an einem Fahrzeug angebrachten Sensoroberfläche, aufweisend:
- zwei Luftdüsen (8, 8', 9), die so angeordnet sind, um Luft auf eine oder mehrere Sensoroberflächen (3) abzugeben;
- eine Luftpumpe (5), die einen Fluideinlass (19), einen Luftauslass (21), eine Luft-Fluid-Schnittstelle (14; 16) und eine Kompressionskammer (10) mit variablem Volumen, die mit dem Luftauslass (21) in Verbindung steht, aufweist;
**dadurch gekennzeichnet, dass** das System ferner aufweist:
- eine Luftdurchfluss-Steuervorrichtung (6), die mit den Luftdüsen (8, 8') und dem Luftauslass (21) in Verbindung steht, um den Luftdurchfluss durch diese zu steuern;
- eine Flüssigkeitspumpe (22), die mit dem Fluideinlass (19) in Verbindung steht, um einen Strom einer unter Druck stehenden Flüssigkeit zuzuführen, sodass sich das Volumen der Kompressionskammer (10) ändert, um eine Druckluftmenge mit einem absoluten Druckwert unter 10 bar zu erzeugen; und einen Durchflussverteiler (24), der zwischen der Luftpumpe (5) und den zwei Luftdüsen (8, 8') oder zwischen der Fluidpumpe (22) und der Luftpumpe (5) angeschlossen ist, sodass ein Ausgang des Durchflussverteilers (24) mit einer Flüssigkeitsdüse (9) verbunden ist, sodass der Durchflussverteiler (24) den Flüssigkeitskreislauf und den Luftkreislauf trennt.

2. System gemäß Anspruch 1, aufweisend eine Luftdüse, die als Teleskopdüse (25) ausgebildete ist, die eine ausfahrbare Luftdüse (8), einen Zylinder (26) und einen im Zylinder (26) untergebrachten Hohlkolben (27) aufweist, sodass der Kolben (27) den Zylinder (26) im Inneren in zwei Kammern (26a, 26b) unterteilt, sodass eine der Kammern (26a) mit einem ersten Einlass (29) verbunden ist, der wiederum direkt mit dem Fluidpumpenauslass (22) verbunden ist, und wobei der Kolben (27) mit einem zweiten Einlass (28) verbunden ist, der wiederum mit dem Auslass der Luftdurchfluss-Steuervorrichtung (6) verbunden ist.

3. System gemäß Anspruch 1 oder 2, wobei das Volumen der Kompressionskammer (10) verringert wird, um eine Druckluftmenge zu erzeugen.

4. System gemäß einem der vorangehenden Ansprüche, wobei die Luftpumpe (5) weiter eine Fluidkammer (11) mit variablem Volumen aufweist, die mit dem Fluideinlass (19) in Verbindung steht, wobei die Luft-Fluid-Schnittstelle (14; 16) so angeordnet ist, dass sie die Fluid- und Kompressionskammer (10, 11) voneinander trennt, und wobei der Strom der unter Druck stehenden Flüssigkeit das Volumen der Fluidkammer (11) ändert, sodass sich das Volumen der Kompressionskammer (10) ändert, um eine Druckluftmenge mit einem absoluten Druckwert unter 10 bar zu erzeugen.

5. System gemäß einem der vorangehenden Ansprüche, wobei die Luftpumpe (5) weiter einen Körper (13) aufweist, mit dem die Luft-Fluid-Schnittstelle (14; 16) so verbunden ist, dass die Kompressionskammer (10) durch den Körper (13) und die Luft-Fluid-Schnittstelle (14; 16) definiert ist und wobei die Luft-Fluid-Schnittstelle (14; 16) den Körper (13) in einen ersten und einen zweiten Abschnitt so unterteilt, dass die Kompressionskammer (10) durch den ersten Abschnitt des Körpers (13) und die Luft-Fluid-Schnittstelle (14; 16) definiert ist und so dass die Fluidkammer (11) durch den zweiten Abschnitt des Körpers (13) und die Luft-Fluid-Schnittstelle (14; 16) definiert ist.

6. System gemäß Anspruch 5, wobei die Luft-Fluid-Schnittstelle ein Kolben (14) ist, der in Gleitkontakt mit dem Körper (13) angeordnet und so ausgebildet ist, dass der Strom der unter Druck stehenden Flüssigkeit den Kolben (14) versetzt, sodass sich das Volumen der Kompressionskammer (10) ändert, um eine Druckluftmenge mit einem absoluten Druckwert unter 10 bar zu erzeugen.

7. System gemäß Anspruch 6, wobei der Kolben (14) durch eine im Körper (13) untergebrachte Feder (15) zum Fluideinlass (19) hin vorgespannt ist.

8. System gemäß Anspruch 5, wobei die Luft-Fluid-Schnittstelle ein elastisches Element (16) ist, das an dem Körper (13) angebracht und so ausgebildet ist, dass der Strom der unter Druck stehenden Flüssigkeit das elastische Element (16) verformt, sodass sich das Volumen der Kompressionskammer (10) ändert, um eine Druckluftmenge mit einem absoluten Druckwert unter 10 bar zu erzeugen.

9. System gemäß Anspruch 8, wobei das elastische Element (16) eine elastische Membran ist.

10. System gemäß Anspruch 8, wobei das elastische Element (16) einen Faltenbalg-förmigen Abschnitt (20) aufweist.

11. System gemäß einem der Ansprüche 8 bis 10, wobei das elastische Element (16) aus einem Elastomer-Material gebildet ist.

12. System gemäß einem der vorangehenden Ansprüche, wobei die Luftpumpe (5) mit einem Rückschlagventil (18) versehen ist, das mit der Kompressionskammer (10) in Verbindung steht, wobei das Rückschlagventil (18) so ausgebildet ist, dass ein Eintreten von Luft in die Kompressionskammer (10) während deren Ausdehnung ermöglicht wird und ein Eintreten von Luft in die Kompressionskammer (10) während deren Komprimierung verhindert wird.

13. System gemäß einem der vorangehenden Ansprüche, weiter aufweisend eine Waschflüssigkeitsdüse (9), die so angeordnet ist, um Waschflüssigkeit auf die Sensoroberfläche (3) abzugeben, und eine Flüssigkeitsdurchfluss-Steuervorrichtung (7), die mit der Waschflüssigkeitsdüse (9) in Verbindung steht, um den Flüssigkeitsdurchfluss durch diese zu steuern.

14. System gemäß einem der vorangehenden Ansprüche, weiter aufweisend eine Steuereinheit, die zumindest mit der Luftdurchfluss-Steuervorrichtung (6) und der Flüssigkeitspumpe (22) betriebsmäßig verbunden ist, um deren Betrieb zu steuern, und wobei die Steuereinheit dazu ausgebildet ist, zumindest einen Reinigungszyklus durchzuführen.

15. System gemäß einem der vorangehenden Ansprüche, weiter aufweisend ein Gehäuse (1) mit einer Öffnung (2), die zur Sensoroberfläche (3) passend ausgebildet ist, wobei:
(i) die Luftdüse (8) fest an dem Gehäuse (1) angebracht ist; und/oder
(ii) die Flüssigkeitsdüse (9) fest an dem Gehäuse (1) angebracht ist; und/oder
(iii) die Luftdüse (8) bewegbar an dem Gehäuse (1) angebracht ist, wobei die Luftdüse (8) so ausgebildet ist, dass sie aus einer Nicht-Betriebsposition in eine Betriebsposition bewegbar ist, sodass die Luftdüse (8) in der Nicht-Betriebsposition zumindest teilweise im Gehäuse (1) verborgen ist; und/oder
(iv) die Flüssigkeitsdüse (9) bewegbar an dem Gehäuse (1) angebracht ist, wobei die Flüssigkeitsdüse (9) so ausgebildet ist, dass sie aus einer Nicht-Betriebsposition in eine Betriebsposition bewegbar ist, sodass die Flüssigkeitsdüse (9) in der Nicht-Betriebsposition zumindest teilweise im Gehäuse (1) verborgen ist; und/oder
(v) die Luftpumpe (5) an dem Gehäuse (1) angebracht ist; und/oder
(vi) die Luftdurchfluss-Steuervorrichtung (6) an dem Gehäuse (1) angebracht ist; und/oder
(vii) die Flüssigkeitsdurchfluss-Steuervorrichtung (7) an dem Gehäuse (1) angebracht ist.

## Revendications

1. Système de nettoyage de la surface d'un capteur externe monté sur un véhicule, comprenant
- deux buses d'air (8, 8', 9) agencées pour projeter de l'air sur une ou plusieurs surfaces de capteur (3),
- une pompe à air (5) comportant une entrée de fluide (19), une sortie d'air (21), une interface air-fluide (14 ; 16) et une chambre de compression (10) à volume variable reliée à la sortie d'air (21), **caractérisé en ce que** le système comprend également
- un dispositif de commande de flux d'air (6) relié aux buses d'air (8, 8') et la sortie d'air (21) pour commander le flux d'air les traversant,
- une pompe à liquide (22) reliée à l'entrée de fluide (19) pour fournir un flux de liquide pressurisé de façon telle que le volume de la chambre de compression (10) varie pour engendrer un volume d'air pressurisé ayant une valeur de pression absolue inférieure à 10 bar,
et
- un distributeur de flux (24) connecté
entre la pompe à air (5) et les deux buses d'air (8, 8') ou
entre la pompe à fluide (22) et la pompe à air (5) de façon qu'une sortie du distributeur de flux (24) soit connectée à une buse de liquide (9), de sorte que le distributeur de flux (24) sépare le circuit de liquide et le circuit d'air.

2. Système selon la revendication 1, comprenant une buse d'air configurée comme une buse télescopique (25), comportant une buse d'air extensible (8), un cylindre (26) et un piston creux (27) logé dans le cylindre (26), de sorte que
le piston (27) divise le cylindre (26) à l'intérieur en deux chambres (26a, 26b), de sorte que
une des chambres (26a) soit connectée à une première entrée (29) qui, de son côté, est connectée directement à la sortie de pompe à fluide (22) et que le piston (27) soit connecté à une deuxième entrée (28) qui, de son côté, est connectée à la sortie du dispositif de commande de flux d'air (6).

3. Système selon la revendication 1 ou 2, **caractérisé en ce que** le volume de la chambre de compression (10) est réduit pour engendrer un volume d'air pressurisé.

4. Système selon l'une des revendications précédentes, **caractérisé en ce que** la pompe à air (5) comprend en outre une chambre de fluide à volume variable (11) reliée à l'entrée de fluide (19), l'interface air-fluide (14 ; 16) étant agencée pour séparer les chambres de fluide et de compression (10, 11) l'une de l'autre, et **en ce que** le flux de liquide pressurisé fait varier le volume de la chambre de fluide (11) de façon à faire varier le volume de la chambre de compression (10) pour engendrer un volume d'air pressurisé ayant une valeur de pression absolue inférieure à 10 bar.

5. Système selon l'une des revendications précédentes, **caractérisé en ce que** la pompe à air (5) comprend en outre un corps (13) auquel l'interface air-fluide (14 ; 16) est reliée de façon que la chambre de compression (10) soit définie par le corps (13) et l'interface air-fluide (14 ; 16) et **en ce que** l'interface air-fluide (14 ; 16) divise le corps (13) en une première et une deuxième partie de façon que la chambre de compression (10) soit définie par la première partie du corps (13) et l'interface air-fluide (14 ; 16) et de façon que la chambre de fluide (11) soit définie par la deuxième partie du corps (13) et l'interface air-fluide (14 ; 16).

6. Système selon la revendication 5, **caractérisé en ce que** l'interface air-fluide est un piston (14) agencé en contact coulissant avec le corps (13) et configuré de façon que le flux de liquide pressurisé déplace le piston (14) afin de faire varier le volume de la chambre de compression (10) pour engendrer un volume d'air pressurisé ayant une valeur de pression absolue inférieure à 10 bar.

7. Système selon la revendication 6, **caractérisé en ce que** le piston (14) est précontraint vers l'entrée de fluide (19) par un ressort (15) logé dans le corps (13).

8. Système selon la revendication 5, **caractérisé en ce que** l'interface air-fluide est un élément élastique (16) attaché au corps (13) et configuré de façon que le flux de liquide pressurisé déforme l'élément élastique (16) afin de faire varier le volume de la chambre de compression (10) pour engendrer un volume d'air pressurisé ayant une valeur de pression absolue inférieure à 10 bar.

9. Système selon la revendication 8, **caractérisé en ce que** l'élément élastique (16) est une membrane élastique.

10. Système selon la revendication 8, **caractérisé en ce que** l'élément élastique (16) comprend une partie en forme de soufflet.

11. Système selon l'une des revendications 8 à 10, **caractérisé en ce que** l'élément élastique (16) est réalisé en un matériau élastomère.

12. Système selon l'une des revendications précédentes, **caractérisé en ce que** la pompe à air (5) est pourvue d'un clapet de non-retour (18) relié à la chambre de compression (10), le clapet de non-retour (18) étant configuré pour permettre l'air d'entrer dans la chambre de compression (10) pendant l'expansion de celle-ci et pour empêcher l'air d'entrer dans la chambre de compression (10) pendant la compression de celle-ci.

13. Système selon l'une des revendications précédentes, comprenant en outre une buse (9) pour liquide de nettoyage agencée pour projeter du liquide de nettoyage sur la surface de capteur (3) et un dispositif de commande (7) du flux de liquide relié à la buse (9) pour liquide de nettoyage pour commander le flux de liquide la traversant.

14. Système selon l'une des revendications précédentes, comprenant en outre une unité de commande opérationnellement associée à au moins le dispositif de commande de flux d'air (6) et la pompe à liquide (22) pour commander leur fonctionnement, et l'unité de commande étant adaptée pour effectuer au moins un cycle de nettoyage.

15. Système selon l'une des revendications précédentes, comprenant en outre un boîtier (1) ayant une ouverture (2) adaptée au montage de la surface de capteur (3), **caractérisé par** au moins une caractéristique parmi :
(i) la buse d'air (8) est attachée de manière fixe au boîtier (1) ;
(ii) la buse de liquide (9) est attachée de manière fixe au boîtier (1) ;
(iii) la buse d'air (8) est attachée de manière mobile au boîtier (1), la buse d'air (8) étant configurée de façon à mouvoir d'une position non opérationnelle à une position opérationnelle de sorte que, dans la position non opérationnelle, la buse d'air (8) est au moins partiellement cachée dans le boîtier (1) ;
(iv) la buse de liquide (9) est attachée de manière mobile au boîtier (1), la buse de liquide (9) étant configurée de façon à mouvoir d'une position non opérationnelle à une position opérationnelle de sorte que, dans la position non opérationnelle, la buse de liquide (9) est au moins partiellement cachée dans le boîtier (1) ;
(v) la pompe à air (5) est attachée au boîtier (1) ;
(vi) le dispositif de commande de flux d'air (6) est attaché au boîtier (1) ; et
(vii) le dispositif de commande de flux de liquide (7) est attaché au boîtier (1).
